# EUROPÄISCHE PATENTSCHRIFT

(11) **EP 3 814 038 B1**
(45) Veröffentlichungstag und Bekanntmachung des Hinweises auf die Patenterteilung: **06.04.2022**
(21) Anmeldenummer: 19740494.0
(22) Anmeldetag: 28.06.2019
(51) Int. Cl.: B22F 10/28, B22F 10/77, B22F 10/85, B33Y 30/00, B33Y 50/02, B22F 3/105, B01D 46/00, B01D 46/44, B33Y 10/00, C04B 35/00

(54) **VERFAHREN ZUM BETREIBEN EINER EINRICHTUNG ZUR ADDITIVEN HERSTELLUNG EINES DREIDIMENSIONALEN OBJEKTS UND DERARTIGE EINRICHTUNG**
METHOD FOR OPERATING A DEVICE FOR ADDITIVE MANUFACTURE OF A THREE-DIMENSIONAL OBJECT, AND SUCH A DEVICE
PROCÉDÉ DESTINÉ À FAIRE FONCTIONNER UN DISPOSITIF DESTINÉ À LA FABRICATION ADDITIVE D'UN OBJET TRIDIMENSIONNEL, ET DISPOSITIF DE CE TYPE

(30) Priorität: 28.06.2018 DE 102018115561
(43) Veröffentlichungstag der Anmeldung: 05.05.2021
(73) Patentinhaber: Trumpf Laser- und Systemtechnik GmbH, 71254 Ditzingen (DE)
(72) Erfinder: ULLMANN, Bjoern, 71732 Tamm (DE); BAUER, Jan, 70839 Gerlingen (DE)
(74) Vertreter: DREISS Patentanwälte PartG mbB
(86) Internationale Anmeldenummer: PCT/EP2019/067397
(87) Internationale Veröffentlichungsnummer: WO 2020/002633

(56) Entgegenhaltungen:
- WO-A2-2016/079494
- KR-B1- 101 344 133
- US-A1- 2016 059 309

## Beschreibung

Die Erfindung betrifft ein Verfahren zum Betreiben einer Einrichtung zur additiven Herstellung eines dreidimensionalen Objekts, wobei eine Gasströmung über eine Bauplattform, auf der das dreidimensionale Objekt aufgebaut wird, geführt wird und wobei die Gasströmung durch ein Filtermedium geleitet wird. Die Erfindung betrifft auch eine Einrichtung zur additiven Herstellung eines dreidimensionalen Objekts.

Derartige Einrichtungen zur additiven Herstellung eines dreidimensionalen Objekts aus pulverförmigem Material weisen eine Objektbildungskammer auf, die in der Regel luftdicht verschlossen ist und während der Herstellung des dreidimensionalen Objekts zur Herstellung einer Schutzgasatmosphäre mit Schutzgas gefüllt ist. In der Objektbildungskammer ist eine Arbeitsfläche vorgesehen, die eine Bauplattform zum Herstellen des dreidimensionalen Objekts darauf aufweist. Ferner ist ein Gasströmungssystem zum Bereitstellen einer Gasströmung über der Bauplattform vorgesehen, wodurch Prozessgase und Partikel, wie beispielsweise beim Herstellungsprozess entstehender Schmauch, abgeführt werden. Zur Filterung der Gasströmung ist eine Filtereinheit mit einem Filtermedium vorgesehen.

Zur additiven Herstellung eines dreidimensionalen Objekts sind sogenannte "Selective Laser Sintering" (SLS) oder "Selective Laser Melting" (SLM) verfahren, also das selektive Lasersintern sowie das selektive Laserschmelzen bekannt. Dazu wird in der Objektbildungskammer das pulverförmige Material, beispielsweise Metall- oder Keramikpulver, mit einer elektromagnetischen Strahlung, insbesondere mit einem Laserlicht, bestrahlt. Hierfür wird auf der Bauplattform der Kammer eine dünne Pulverschicht aufgebracht, die mit dem Laserlicht zur Herstellung des Objekts gesintert oder geschmolzen wird. Die Herstellung des Objekts erfolgt dabei schrittweise; Pulverschichten werden nacheinander aufgebracht und jeweils gesintert oder geschmolzen. Zwischen den Fertigungsschritten wird das pulverförmige Material mit einer Aufbringungseinrichtung, beispielsweise einem Wischer, einer Walze, einer Bürste oder einer Klinge auf die Bauplattform aufgebracht bzw. aufgestrichen.

Beim Versintern bzw. Verschmelzen des Pulvers entstehen Prozessgase und sonstige Partikel, wie beispielsweise Pulveraggregate oder Schmauch, die das Innere der Objektbildungskammer sowie Schutzgläser der Lasereinrichtung und zugehörige Komponenten oder Optiken verschmutzen können. Falls Laserlicht von den Verschmutzungen absorbiert wird, kann dies zur Ablenkung des Laserlichts und zu Beschädigungen an den Bauteilen führen. Um derartige Beschädigungen zu vermeiden, werden die als Laserlicht führenden und umlenkenden Bauteile regelmäßig gereinigt, was mit nicht unerheblichem Aufwand verbunden ist.

Aus der EP 3 023 228 A1 ist bekannt, ein Gasströmungssystem vorzusehen, das eine Gasströmung über der Bauplattform bereitstellt, um Prozessgase und Pulverpartikel aus dem Bereich der Bauplattform abzuführen. Entsprechende Gasströmungssysteme sind aus der EP 2 687 305 A1, der EP 1 839 781 A1 oder der DE 10 2010 052 206 bekannt.

Ein Verfahren bzw. eine Einrichtung mit Merkmalen des Oberbegriffs der unabhängigen Patentansprüche ist aus der WO 2016/079494 A2 bekannt. Um einen zu hohen Druckabfall aufgrund eines zugesetzten Filters im Gasströmungssystem zu erkennen, wird dort vorgeschlagen, Gasdrucksensoren vor und hinter der Filtereinrichtung vorzusehen und den Differenzdruck zu messen. Bei zu stark zugesetztem Filterelement wird dieses dann ausgetauscht. Problematisch ist allerdings, dass die Filterelemente mit vergleichsweise feinen Metallpartikeln zugesetzt sind, die brennbar und leicht entzündlich sind. Zur Lösung dieses Problems schlägt die WO 2016/079494 A2 vor, die Filterelemente zur Vermeidung einer Reaktion mit Sauerstoff luftdicht zu verschießen, wenn die Tür der Objektbildungskammer geöffnet wird. Die luftdicht verschlossenen Filtermedien können dann ausgetauscht und entsorgt werden.

Aus der KR 101 344 133 B1 ist eine automatische Kalziumkarbonat Versorgungseinrichtung für einen Filter eines Staubsammlers bekannt. Der Staubsammler filtert adhäsiven Staub und Feinstaub, der beim Schneiden oder Schweißen unter Verwendung eines Lasers oder Plasmas entsteht. Das automatische Zuführen von Kalziumkarbonat auf dem Filter ermöglicht den Staub von dem Filter zu trennen und die dabei vorhandene Explosionsgefahr des Filters zu verhindern.

Der Erfindung liegt die Aufgabe zugrunde, ein Verfahren und eine Einrichtung zur additiven Herstellung eines dreidimensionalen Objekts bereitzustellen, mit dem das Filtermedium in der Einrichtung zur additiven Herstellung eines dreidimensionalen Objekts funktionssicher betrieben werden kann. Insbesondere soll verhindert werden, dass es zu einer Entzündung des Filtermediums, bzw. der daran anhaftenden Partikeln kommen kann.

Diese Aufgabe wird durch ein Verfahren mit den Merkmalen des Patentanspruchs 1 sowie durch eine Einrichtung mit den Merkmalen des Patentanspruchs 10 gelöst.

Das erfindungsgemäße Verfahren weist nachfolgende Verfahrensschritte auf:
- Bestimmen des Differenzgasdrucks Δp₁ zwischen dem Gasdruck (pᵥ₁) vor und dem Gasdruck (pₙ₁) hinter dem Filtermedium vor einer Aufbringung von Inertmaterial auf das Filtermedium bei durch das Filtermedium hindurchströmender Gasströmung,
- Aufbringen von Inertmaterial auf das Filtermedium,
- Bestimmen des Differenzgasdrucks Δp₂ zwischen dem Gasdruck (pᵥ₂) vor und dem Gasdruck (pₙ₂) hinter dem Filtermedium nach der Aufbringung des Inertmaterials auf das Filtermedium bei durch das Filtermedium hindurchströmenden Gasströmung,
- Bestimmen des resultierenden Differenzdrucks Δpᵣ aus der Differenz der Differenzdrücke Δp₂ und Δp₁, und
- Bestimmen eines Aufbringungsgrades von Inertmaterial auf das Filtermedium aus dem resultierenden Differenzdruck Δpᵣ.

Mit dem erfindungsgemäßen Verfahren wird folglich Inertmaterial auf das Filtermedium, das zur Filterung der Gasströmung der Einrichtung zur additiven Herstellung eines dreidimensionalen Objekts vorgesehen und eingerichtet ist, aufgebracht. Mit dem Inertmaterial werden die zu filternden Stoffe inertisiert, d.h. sie werden zu reaktionsträgen Stoffen umgewandelt bzw. verhalten sich reaktionsträge. Mit dem in Inertmaterial können die zu filternden, reaktiven Partikel beispielsweise ausreichend verdünnt werden, so dass es zu keiner Kettenreaktion kommen kann, bei der oxidierende und sich dadurch aufheizende Partikel weitere Partikel aufschmelzen oder in Brand setzen. Mit dem erfindungsgemäßen Verfahren kann zudem sichergestellt werden, dass ein ausreichender Aufbringungsgrad des Inertmaterials auf das Filtermedium gegeben ist.

Durch die Bestimmung des Differenzgasdrucks Δp₁ kann folglich der Druckabfall aufgrund des Filtermediums bestimmt werden, und zwar insbesondere ohne dass zu filternde Partikel oder ohne dass Inertmaterial auf dem Filtermedium vorgesehen sind. Der Differenzgasdruck Δp₁ wird folglich insbesondere mit einem unbenutzten, also einem frischen Filtermedium durchgeführt. Nach der Bestimmung des Differenzgasdrucks Δp₁ wird das Inertmaterial auf das Filtermedium aufgebracht, beispielsweise aufgesprüht oder aufgestrichen. Nach dem Aufbringen von Inertmaterial auf das Filterelement wird der Differenzgasdruck Δp₂ erneut bestimmt. Aus dem resultierenden Differenzdruck Δpᵣ kann dann auf den Aufbringungsgrad des Inertmaterials auf das Filterelement, also wieviel Inertmaterial auf dem Filtermedium vorhanden ist bzw. wie stark das Filtermedium mit dem Inertmaterial zugesetzt ist, rückgeschlossen werden. Damit kann sichergestellt werden, das ausreichend Inertmaterial auf dem Filtermedium vorhanden ist, um beim Vorgang der additiven Herstellung des dreidimensionalen Objekts entstehende Partikel am Filtermedium sicher inertisieren zu können.

Das erfindungsgemäße Verfahren wird insbesondere dann durchgeführt, wenn kein Objekt hergestellt wird. Dadurch können unerwünschte Verunreinigungen des Filtermediums während der Messung der Differenzgasdrücke Δp₁ und Δp₂ vermieden werden.

Es ist vorteilhaft, wenn der resultierende Differenzdruck Δpᵣ mit einem hinterlegten unteren Schwellwert S_{U} und/oder mit einem hinterlegten oberen Schwellwert Sₒ verglichen wird. Durch einen Vergleich kann bestimmt werden, ob der Aufbringungsgrad von Inertmaterial auf das Filtermedium ausreichend ist. Liegt der resultierende Differenzdruck Δpᵣ unterhalb eines unteren Schwellwerts S_{U}, dann ist eine unzureichende Aufbringung von Inertmaterial auf das Filtermedium erfolgt. Liegt der resultierende Differenzdruck Δpᵣ oberhalb eines oberen Schwellwerts Sₒ, so ist davon auszugehen, dass zu viel Inertmaterial auf das Filtermedium aufgebracht wurde.

Dabei ist vorteilhaft, wenn ein Signal erzeugt und/oder ausgegeben wird, wenn der resultierende Differenzdruck Δpᵣ oberhalb des unteren Schwellwerts S_{U} und/oder unterhalb des oberen Schwellwerts Sₒ ist. Durch ein derartiges Signal kann signalisiert werden, dass ausreichend Inertmaterial auf das Filtermedium aufgebracht wurde. Ferner ist denkbar, dass dann ein Signal erzeugt wird, wenn der resultierende Differenzdruck Δpᵣ unterhalb des unteren Schwellwerts S_{U} ist. Mit einem solchen Signal kann signalisiert werden, dass zu wenig Inertmaterial aufgetragen wurde. Schließlich ist auch denkbar, dass dann ein Signal ausgegeben wird, wenn der resultierende Differenzdruck Δpᵣ oberhalb des oberen Schwellwerts ist. Damit kann zum Ausdruck gebracht werden, dass zu viel Inertmaterial auf das Filtermedium aufgebracht wurde.

Durch die Erzeugung und/oder Ausgabe eines derartigen Signals kann ein Betriebszustand zugelassen oder verhindert werden.

Gemäß der Erfindung kann weiterhin vorgesehen sein, dass während der Herstellung eines dreidimensionalen Objekts ein Betriebsdifferenzdruck Δp_{b} kontinuierlich und/oder in regelmäßigen oder unregelmäßigen Abständen bestimmt wird, und dass aus dem Betriebsdifferenzdruck Δp_{b} ein Zusetzungsgrad Z_{F} des Filtermediums bestimmt wird. Steigt der Betriebsdifferenzdruck Δp_{b} an, so geht dies mit einem Zusetzen des Filtermediums mit den aus dem Gasstrom herausgefilterten Partikeln einher. Je höher der Betriebsdifferenzdruck Δp_{b} ist, desto mehr Partikel setzen das Filtermedium zu.

Dabei kann vorgesehen sein, dass bei Überschreiten eines vorgegebenen Zusetzungsgrades Zₘₐₓ ein Signal erzeugt und/oder ausgegeben wird. Damit kann signalisiert werden, dass der Strömungswiderstand des Filtermediums im Betrieb der Einrichtung zu groß ist, und dass das Filtermedium auszutauschen oder zu reinigen ist.

In diesem Zusammenhang kann vorgesehen sein, dass bei Überschreiten des vorgegebenen Zusetzungsgrades Zₘₐₓ der Betriebszustand geändert wird und das Filtermedium abgereinigt wird. Ein Abreinigen kann dabei automatisiert, beispielsweise durch einen Druckluftstoß, eine Rückspülung, ein Abbürsten oder dergleichen erfolgen. Dazu kann eine geeignete Abreinigungseinrichtung vorgesehen sein, die bei Überschreiten des vorgegebenen Zusetzungsgrades Zₘₐₓ automatisiert angesteuert wird. Das Abreinigen des Filtermediums erfolgt dabei vorzugsweise nicht während der Herstellung des Objekts, sondern während einer Herstellungsunterbrechung oder zwischen zwei Herstellungsvorgängen.

Dabei kann vorgesehen sein, dass vor Beginn des Herstellungsprozesses ein oder mehrere Sprühstöße von Inertmaterial auf das Filtermedium aufgebracht werden und dass eine Abreinigung des Filtermediums dann erfolgt, wenn der zulässige Zusetzungsgrad Zₘₐₓ aufgrund eines Zusetzens des Filtermediums durch die reaktiven Partikel, wie Pulver, Schmauch etc. erreicht bzw.überschritten wird.

Ferner ist auch denkbar, dass zunächst eine erste Dosis von Inertmaterial auf das Filtermedium aufgebracht wird und dass dann im Betrieb das weitere Zusetzen des Filtermediums mit den Partikeln überwacht wird. Bei Erreichen eines ersten Zusetzungsgrades Z₁ wird dann eine weitere Dosis von Inertmaterial auf das Filtermedium aufgebracht. Dieser Vorgang kann mehrfach wiederholt werden, bis der maximal zulässige Zusetzungsgrades Zₘₐₓ erreicht ist. Dies ist insbesondere dann vorteilhaft, wenn das Inertmaterial und die reaktiven Partikel gut aneinander haften.

Außerdem ist es denkbar zunächst reaktive Partikel auf dem Filtermaterial zu sammeln und anschließend das Inertmaterial aufzubringen. Dies ist ebenfalls insbesondere dann vorteilhaft, wenn das Inertmaterial und die reaktiven Partikel gut aneinander haften.

Als Inertmaterial findet granulat- oder pulverförmiges Material Verwendung, das Kalk (Kalziumkarbonat), Sand, Glas und/oder Keramik umfasst und/oder daraus gebildet ist.

Bevorzugt ist das Inertmaterial aus einem Trocknungsmittel gebildet oder umfasst zusätzlich ein Trocknungsmittel. Dies hat den Vorteil, dass die durch das Filtermedium hindurchströmende Gasströmung durch das auf dem Filtermedium aufgebrachte Trocknungsmittel getrocknet wird, wodurch bspw. ein Tausch des mit Flüssigkeiten versetzten Gases gegen trockenes Gas seltener notwendig wird oder die Verwendung einer teuren, zusätzlichen Gasreinigungsanlage vermieden wird. Unter Trocknung der Gasströmung versteht man hierbei das Entfernen von Flüssigkeiten, insbesondere Wasser, aus der Gasströmung. Bekannte Trocknungsmittel binden Flüssigkeiten bspw. durch Adsorption, Absorption oder chemische Reaktionen. Beispiele, insbesondere für Wasser, sind Kieselgel, Zeolithe, Kalziumchlorid, Kalziumoxid und/oder Aluminiumoxid. Besonders bevorzugt werden Trocknungsmittel verwendet, die zumindest im trockenen Zustand bzgl. der am Filtermedium anhaftenden Partikel nicht oxidierend wirken. Dadurch wird der Verbrauch zusätzlichen Inertmaterials zur Inertisierung des Trocknungsmittels vermieden.

Vorteilhafterweise wird Trocknungsmittel in einem vom Aufbringen von Inertmaterial auf das Filtermedium unabhängigen Schritt auf das Filtermedium aufgebracht. Dadurch ist es möglich unabhängig voneinander einen gerade ausreichenden Aufbringungsgrad an Inertmaterial und Trocknungsmittel auf dem Filtermedium sicherzustellen. Dies ist vorteilhaft, da dadurch eine Überdosierung von Inertmaterial bzw. Trocknungsmittel vermieden wird.

Zusätzlich können hierbei folgende Schritte durchgeführt werden:
- Bestimmen des Differenzgasdrucks Δp₁ zwischen dem Gasdruck (pᵥ₁) vor und dem Gasdruck (pₙ₁) hinter dem Filtermedium vor einer Aufbringung von Trocknungsmittel auf das Filtermedium bei durch das Filtermedium hindurchströmender Gasströmung,
- mindestens einmaliges Bestimmen des Differenzgasdrucks Δp₂ zwischen dem Gasdruck (pᵥ₂) vor und dem Gasdruck (pₙ₂) hinter dem Filtermedium nach der Aufbringung des Trocknungsmittels auf das Filtermedium bei durch das Filtermedium hindurchströmender Gasströmung,
- Bestimmen des resultierenden Differenzdrucks Δpᵣ aus der Differenz der Differenzdrücke Δp₂ und Δp₁, und
- Bestimmen eines Aufbringungsgrades von Trocknungsmittel auf das Filtermedium und/oder des Aufbringungsgrades von Trocknungsmittel sowie einer durch das Trocknungsmittel gebundenen Flüssigkeitsmenge aus dem resultierenden Differenzdruck Δpᵣ. Dadurch ist es möglich einen ausreichenden Aufbringungsgrad an Inertmaterial und Trocknungsmittel auf dem Filtermedium zu bestimmen, insbesondere durch Bestimmung der durch das Trocknungsmittel gebundenen Flüssigkeitsmenge. So beeinflussen bspw. die oxidierende Wirkung von Trocknungsmittel und gebundene Flüssigkeitsmenge die aufzubringende Menge an Inertmaterial, welche zum funktionssicheren Betrieb der Einrichtung zur additiven Herstellung notwendig ist.

Die eingangs genannte Aufgabe wird auch gelöst durch eine Einrichtung zur additiven Herstellung eines dreidimensionalen Objekts aus pulverförmigem Material mit den Merkmalen des Patentanspruchs 10, wobei eine Dosiereinrichtung zur Dosierung und Aufbringung eines Inertmaterials auf das Filtermedium vorgesehen ist, und wobei die Überwachungseinrichtung und die Dosiereinrichtung zur Ausführung des erfindungsgemäßen Verfahrens eingerichtet sind.

Dabei ist es vorteilhaft, wenn das Filtermedium horizontal im Raum angeordnet ist, so dass das Inertmaterial sich gleichmäßig auf dem Filtermedium verteilen und nicht der Schwerkraft folgend vom Filtermedium nach unten abgleiten kann.

Vorteilhafterweise ist die Dosiereinrichtung zusätzlich zur Dosierung und Aufbringung eines Trocknungsmittels auf das Filtermedium eingerichtet. Alternativ kann eine zweite Dosiereinrichtung zur Dosierung und Aufbringung eines Trocknungsmittels auf das Filtermedium vorgesehen sein, wobei die Überwachungseinrichtung und die zweite Dosiereinrichtung zur Ausführung der oben genannten Verfahren, in denen in einem vom Aufbringen von Inertmaterial auf das Filtermedium unabhängigen Schritt Trocknungsmittel auf das Filtermedium aufgebracht wird, eingerichtet sind.

Weitere Einzelheiten und vorteilhafte Ausgestaltungen sind der nachfolgenden Beschreibung zu entnehmen, anhand derer ein Ausführungsbeispiel der Erfindung näher beschrieben und erläutert ist.

Es zeigen:
- Figur 1: eine schematische perspektivische Ansicht einer erfindungsgemäßen Einrichtung zur additiven Herstellung eines dreidimensionalen Objekts;
- Figur 2: eine schematische Ansicht der Filtereinheit, der Überwachungseinrichtung und der Dosiereinrichtung der Einrichtung gemäß Figur 1; und
- Figur 3: eine systematische Darstellung der Abfolge von Verfahrensschritten des erfindungsgemäßen Verfahrens.

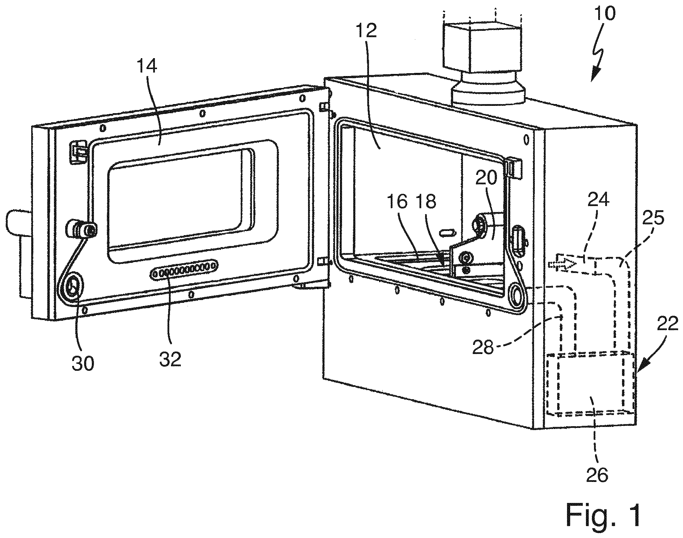

Die in der Figur 1 gezeigte Einrichtung 10 zur additiven Herstellung eines dreidimensionalen Objekts aus pulverförmigem Material entspricht im Wesentlichen der in Figur 1 der EP 3 023 228 A1 gezeigten Einrichtung. Die Einrichtung 10 umfasst eine Objektbildungskammer 12, die mit einer Tür 14 verschließbar ist. In der Kammer 12 ist eine Arbeitsfläche 16 vorgesehen, die eine Bauplattform 18 aufweist, auf der das dreidimensionale Objekt hergestellt wird. In der Kammer 12 ist ein als Wischarm ausgebildeter Beschichter 20 vorgesehen, mit dem pulverförmiges Material von einer Vorratsstelle hin auf die Bauplattform 18 gestrichen wird. Mit einer nicht dargestellten Lasereinheit wird dann das pulverförmige Material Schicht für Schicht gesintert oder aufgeschmolzen, um letztlich das dreidimensionale Objekt herzustellen.

Ferner ist ein Gasströmungssystem 22 vorgesehen, mit dem eine Gasströmung über der Bauplattform 18 bereitgestellt wird. Dazu wird Gas aus der Kammer 12 an einer Öffnung 24 abgesaugt und über eine Leitung 25 von der Öffnung 24 hin zu einer Filtereinheit 26 geleitet. Das Gas durchströmt die Filtereinheit 26 und wird zurück in die Kammer 12 geführt. Bei der in der Figur 1 gezeigten Ausführungsform wird das gefilterte Gas zunächst über eine Leitung 28 in eine mit der Öffnung der Leitung 28 korrespondierende Öffnung 30 an der Tür 14 geleitet und durch türseitige Einlässe 32 in die Kammer 12 geführt.

Das Gassystem 22 kann neben der Filtereinheit 26 weitere Komponenten enthalten, insbesondere eine die Gasströmung erzeugende Pumpe samt zugehöriger Regel- und Steuereinheit, die in der Figur 1 nicht gezeigt sind.

Für weitere Einzelheiten der in der Figur 1 gezeigten Einrichtung 10 wird auf die Beschreibung der EP 3 023 228 A1 verwiesen.

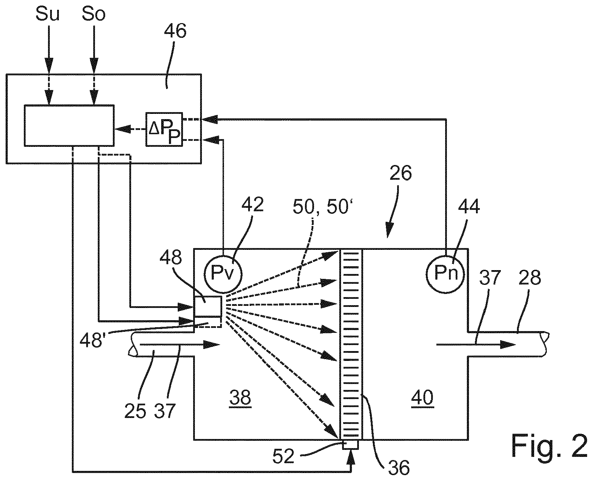

Die Figur 2 zeigt eine schematische Ansicht der Filtereinheit 26, mit der Zuleitung 25 und der Ableitung 28. In der Filtereinheit 26 ist ein Filtermedium 36 vorgesehen, durch welches aus der Leitung 25 kommendes Gas hindurchströmt, wobei das gefilterte Gas die Filtereinheit 26 durch die Leitung 28 verlässt. Der Gasstrom bzw. die Richtung des Gasstroms durch das Filtermedium 36 ist mit den Pfeilen 37 angedeutet.

Das Filtermedium 36 teilt folglich die Filtereinheit 26 in einen stromaufwärtigen Raum 38 und einen stromabwärtigen Raum 40. Im Raum 38 ist ein Drucksensor 42 zur Messung des Gasdrucks pᵥ vor dem Filtermedium 36 vorgesehen; im Raum 40 ist ein Drucksensor 44 zur Messung des Gasdrucks pₙ hinter dem Filtermedium 36 vorgesehen. Die Ausgangssignale der Drucksensoren 42 und 44 werden einer Überwachungseinrichtung 46 zugeführt, welche aus der Differenz der Drücke pₙ und pᵥ, also der Drücke im Raum 38 vor dem Filtermedium 36 und im Raum 40 hinter dem Filtermedium 36, den Differenzdruck Δpᵣ bestimmt.

In der Figur 2 ist das Filtermedium 36 vertikal angeordnet; gemäß der Erfindung kann es allerdings vorteilhaft sein, das Filtermedium 36 horizontal anzuordnen, sodass das Inertmaterial sich gleichmäßig auf dem Filtermedium 36 verteilen kann und nicht der Schwerkraft folgend vom Filtermedium nach unten abgleiten kann.

In der Figur 2 ist ferner eine Dosiereinrichtung 48 zur Dosierung und Aufbringung von granulat- oder pulverförmigem Inertmaterial 50 auf das Filtermedium 36 schematisch dargestellt. Zur Dosierung und Aufbringung des Inertmaterials 50 auf das Filtermedium 36 wird die Dosiereinrichtung 48 von der Überwachungseinrichtung 46 angesteuert. Das Inertmaterial 50 kann dabei beispielsweise durch Aufsprühen, wie es in der Figur 2 durch die gestrichelten Pfeile angedeutet ist, auf das Filtermedium 36 aufgebracht werden. Dabei kann ein Sprühstoß ausreichend sein.

Die Dosiereinrichtung 48 kann auch dazu ausgebildet sein zusätzlich Trocknungsmittel 50' auf das Filtermedium 36 aufzubringen. Dazu kann die Dosiereinrichtung 48 bspw. mit zwei Zuführungen ausgestattet sein. Alternativ kann dem Inertmaterial 50 auch direkt Trocknungsmittel 50' beigesetzt sein. In einer weiteren Alternative kann die Einrichtung 10 eine zweite Dosiereinrichtung 48' zum Aufbringen des Trocknungsmittel 50' auf das Filtermedium 36, z.B. durch Aufsprühen, aufweisen.

Das aufgebrachte Trocknungsmittel (50') entzieht dem ohnehin durch das Filtermedium 36 hindurchströmenden Gas Feuchtigkeit, z.B. Wasser, aber auch andere Flüssigkeiten, die beim Sintern oder Schmelzen des pulverförmigen Materials verdampft und von dem Gasstrom aufgenommen wurden.

In der Figur 2 ist ferner eine Abreinigungseinheit 52 zur Abreinigung des Filtermediums schematisch angedeutet. Bei Ansteuerung der Abreinigungseinheit 52 durch die Überwachungseinrichtung 46 wird das Inertmaterial 50 zusammen mit sich im Inertmaterial 50 sammelnden Partikeln abgereinigt. Eine Abreinigung kann beispielsweise mechanisch durch Abbürsten oder pneumatisch durch Aufbringen eines Druckstoßes auf das Filtermedium 36 entgegen der eigentlichen Strömungsrichtung erfolgen.

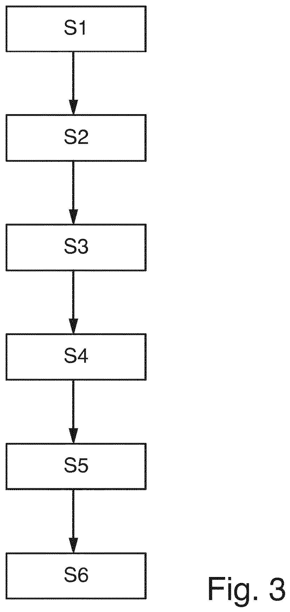

Zur Durchführung des erfindungsgemäßen Verfahrens arbeitet die Einrichtung 10 gemäß den Schritten, wie sie in Figur 3 dargestellt sind.

In einem ersten Schritt S₁ wird mittels den Drucksensoren 42, 44 der Differenzdruck Δp₁ zwischen dem Gasdruck pᵥ₁ vor dem Filtermedium 36 im Raum 38 und dem Gasdruck pₙ₁ hinter dem Filtermedium 36 im Raum 40 bestimmt. Dieser Differenzgasdruck Δp₁ wird bei nicht verunreinigtem Filtermedium 36 bestimmt, insbesondere dann, wenn kein Objekt hergestellt wird und wenn Gas mit Betriebsdruck durch das Filtermedium 36 hindurchströmt.

Nach Bestimmen des Differenzgasdrucks Δp₁ steuert in Schritt S₂ die Überwachungseinrichtung 46 die Dosiereinrichtung 48 an, so dass das granulat- oder pulverförmige Inertmaterial 50 auf das Filtermedium 36 aufgebracht wird.

Nachdem das Inertmaterial auf das Filtermedium 36 aufgebracht wurde, wird in Schritt S₃ der Differenzdruck Δp₂, also die Differenz aus den Gasdrücken p_{V2} vor dem Filtermedium 36 im Raum 38 und dem Gasdruck pₙ₂ hinter dem Filtermedium 36 im Raum 40 bestimmt, und zwar insbesondere ebenfalls dann, wenn kein Objekt hergestellt wird und wenn Gas mit Betriebsdruck durch das Filtermedium 36 hindurchströmt.

Im Schritt S₄ wird der resultierende Differenzdruck Δpᵣ aus der Differenz der zuvor bestimmten Differenzdrücke Δp₂ und Δp₁ bestimmt.

In einem nächsten Schritt S₅ wird dann aus dem resultierenden Differenzdruck Δpᵣ auf den Aufbringungsgrad des Inertmaterials auf das Filtermedium 26 rückgeschlossen.

Zur Bestimmung, ob der Aufbringungsgrad innerhalb vorgegebener Grenzen liegt, wird in einem Schritt S₆ bestimmt, ob der resultierende Differenzdruck Δpᵣ mit einem hinterlegten unteren Schwellwert S_{U} und mit einem hinterlegten oberen Schwellwert Sₒ verglichen. Die Schwellwerte können einmalig in einem Kalibriervorgang ermittelt werden und als Referenzwerte hinterlegt werden. Liegt der resultierende Differenzdruck Δpᵣ in einem Bereich zwischen dem unteren Schwellwert S_{U} und dem oberen Schwellwert Sₒ, so kann ein Signal ausgegeben werden, dass ausreichend Inertmaterial auf das Filtermedium aufgebracht wurde und dass ein ausreichender Aufbringungsgrad vorliegt. Liegt der resultierende Differenzdruck Δpᵣ unterhalb dem unteren Schwellwert S_{U}, so wurde zu wenig Inertmaterial auf das Filtermedium aufgebracht und liegt der resultierende Differenzdruck Δpᵣ oberhalb des oberen Schwellwert Sₒ, so wurde zu viel Inertmaterial aufgebracht. In derartigen Fällen kann ein entsprechendes Signal generiert werden.

Im Betrieb der Einrichtung 10, also während des Herstellens eines dreidimensionalen Objekts aus pulverförmigem Material wird der Betriebsdifferenzdruck Δp_{b} zwischen den Räumen 40 und 38 mit der Überwachungseinrichtung 46 insbesondere kontinuierlich überwacht. Steigt der Betriebsdifferenzdruck Δp_{b} über einen vorgebbaren, noch zulässigen Zusetzungsgrad Zₘₐₓ, so kann die Abreinigungseinheit 52 zur Abreinigung des Filtermediums 36 von der Überwachungseinrichtung 46 angesteuert werden. Während der Abreinigung des Filtermediums 36 wird vorzugsweise der Herstellungsprozess des dreidimensionalen Objekts unterbrochen bzw. die Abreinigung erfolgt dann, wenn das Objekt fertig hergestellt ist.

## Patentansprüche

1. Verfahren zum Betreiben einer Einrichtung (10) zur additiven Herstellung eines dreidimensionalen Objekts, wobei eine Gasströmung (37) über eine Bauplattform, auf der das dreidimensionale Objekt aufgebaut wird, geführt wird und wobei die Gasströmung (37) durch ein Filtermedium (36) geleitet wird, **gekennzeichnet durch** folgende Schritte:
- Bestimmen des Differenzgasdrucks Δp₁ zwischen dem Gasdruck (pᵥ₁) vor und dem Gasdruck (pₙ₁) hinter dem Filtermedium vor einer Aufbringung von Inertmaterial(50) auf das Filtermedium (36) bei durch das Filtermedium (36) hindurchströmender Gasströmung (37), wobei als Inertmaterial (50) granulat- oder pulverförmiges Material, das Kalk, Sand, Glas, und/oder Keramik umfasst und/oder daraus gebildet ist, Verwendung findet,
- Aufbringen von Inertmaterial (50) auf das Filtermedium (36),
- Bestimmen des Differenzgasdrucks Δp₂ zwischen dem Gasdruck (pᵥ₂) vor und dem Gasdruck (pₙ₂) hinter dem Filtermedium nach der Aufbringung des Inertmaterials auf das Filtermedium (36) bei durch das Filtermedium (36) hindurchströmender Gasströmung (37),
- Bestimmen des resultierenden Differenzdrucks Δpᵣ aus der Differenz der Differenzdrücke Δp₂ und Δp₁, und
- Bestimmen eines Aufbringungsgrades von Inertmaterial (50) auf das Filtermedium (36) aus dem resultierenden Differenzdruck Δpᵣ.

2. Verfahren nach Anspruch 1, **dadurch gekennzeichnet, dass** der resultierende Differenzdruck Δpᵣ mit einem hinterlegten unteren Schwellwert S_{U} und/oder mit einem hinterlegten oberen Schwellwert S_{O} verglichen wird.

3. Verfahren nach Anspruch 2, **dadurch gekennzeichnet, dass** ein Signal erzeugt und/oder ausgegeben wird,
- wenn der resultierende Differenzdruck Δpᵣ oberhalb des unteren Schwellwert S_{U} und/oder unterhalb des oberen Schwellwerts Sₒ liegt, und/oder
- wenn der resultierende Differenzdruck Δpᵣ unterhalb des unteren Schwellwerts S_{U} liegt, und/oder
- wenn der resultierende Differenzdruck Δpᵣ oberhalb des oberen Schwellwerts Sₒ liegt.

4. Verfahren nach Anspruch 1, 2 oder 3, **dadurch gekennzeichnet, dass** während der Herstellung eines dreidimensionalen Objekts ein Betriebsdifferenzdruck Δp_{b} bestimmt wird, und dass aus dem Betriebsdifferenzdruck Δp_{b} ein Zusetzungsgrad Z_{F} des Filtermediums bestimmt wird.

5. Verfahren nach Anspruch 4, **dadurch gekennzeichnet, dass** bei Überschreiten eines vorgegebenen Zusetzungsgrades Zₘₐₓ ein Signal erzeugt und/oder ausgegeben wird.

6. Verfahren nach Anspruch 5, **dadurch gekennzeichnet, dass** bei Überschreiten eines vorgegebenen Zusetzungsgrades Zₘₐₓ das Filtermedium abgereinigt wird.

7. Verfahren nach einem der vorhergehenden Ansprüche,
**dadurch gekennzeichnet, dass** das Inertmaterial (50) aus einem Trocknungsmittel gebildet ist oder zusätzlich ein Trocknungsmittel umfasst, insbesondere Kieselgel, Zeolithe, Kalziumchlorid, Kalziumoxid und/oder Aluminiumoxid.

8. Verfahren nach einem der vorhergehenden Ansprüche,
**dadurch gekennzeichnet, dass** in einem vom Aufbringen des Inertmaterials (50) auf das Filtermedium (36) unabhängigen Schritt Trocknungsmittel (50') auf das Filtermedium (36) aufgebracht wird.

9. Verfahren nach Anspruch 8, **gekennzeichnet durch** folgende Schritte:
- Bestimmen des Differenzgasdrucks Δp₁ zwischen dem Gasdruck (pᵥ₁) vor und dem Gasdruck (pₙ₁) hinter dem Filtermedium vor einer Aufbringung von Trocknungsmittel (50') auf das Filtermedium bei durch das Filtermedium (36) hindurchströmender Gasströmung (37),
- mindestens einmaliges Bestimmen des Differenzgasdrucks Δp₂ zwischen dem Gasdruck (pᵥ₂) vor und dem Gasdruck (pₙ₂) hinter dem Filtermedium nach der Aufbringung des Trocknungsmittels (50') auf das Filtermedium (36) bei durch das Filtermedium (36) hindurchströmender Gasströmung (37),
- Bestimmen des resultierenden Differenzdrucks Δpᵣ aus der Differenz der Differenzdrücke Δp₂ und Δp₁, und
- Bestimmen eines Aufbringungsgrades von Trocknungsmittel (50') auf das Filtermedium (36) und/oder des Aufbringungsgrades von Trocknungsmittel (50') und einer durch das Trocknungsmittel aufgenommenen aus dem resultierenden Differenzdruck Δpᵣ.

10. Einrichtung (10) zur additiven Herstellung eines dreidimensionalen Objekts aus pulverförmigem Material, mit einer Objektbildungskammer (12),
mit einer eine Arbeitsfläche (16) in der Objektbildungskammer (12), wobei die Arbeitsfläche (16) eine Bauplattform (18) zum Herstellen des dreidimensionalen Objekts darauf aufweist,
mit einem Gasströmungssystem (22) zum Bereitstellen einer Gasströmung (37) über der Bauplattform (18), mit einer Filtereinheit (26) mit einem Filtermedium (36) zur Filterung der Gasströmung (37), und
mit einer Überwachungseinrichtung (46) zur Überwachung der Gasdrücke (pᵥ, pₙ) vor und hinter dem Filtermedium (36) **,dadurch gekennzeichnet, dass** eine Dosiereinrichtung (48) zur Dosierung und Aufbringung eines Inertmaterials (50) auf das Filtermedium (36) vorgesehen ist, wobei die Überwachungseinrichtung (46) und die Dosiereinrichtung (48) zur Ausführung eines Verfahrens nach einem der Ansprüche 1 bis 9 eingerichtet sind.

11. Einrichtung nach Anspruch 10, **dadurch gekennzeichnet, dass** die Dosiereinrichtung (48) zusätzlich zur Dosierung und Aufbringung eines Trocknungsmittels (50) auf das Filtermedium (36) eingerichtet ist oder eine zweite Dosiereinrichtung (48') zur Dosierung und Aufbringung eines Trocknungsmittels (50) auf das Filtermedium (36) vorgesehen ist, wobei die Überwachungseinrichtung (46) und die zweite Dosiereinrichtung (48') zur Ausführung eines Verfahrens nach Anspruch 8 oder 9 eingerichtet sind.

## Claims

1. Method for operating a device (10) for additively manufacturing a three-dimensional object, a gas flow (37) being guided over a construction platform on which the three-dimensional object is built, and the gas flow (37) being conducted through a filter medium (36), **characterized by** the following steps:
- determining the differential gas pressure Δp₁ between the gas pressure (pᵥ₁) before the filter medium and the gas pressure (pₙ₁) after the filter medium before inert material (50) is applied to the filter medium (36) when the gas flow (37) flows through the filter medium (36), granular or powder material which comprises and/or is formed from lime, sand, glass and/or ceramics being used as the inert material (50),
- applying inert material (50) to the filter medium (36),
- determining the differential gas pressure Δp₂ between the gas pressure (pᵥ₂) before the filter medium and the gas pressure (pₙ₂) after the filter medium after inert material is applied to the filter medium (36) when the gas flow (37) flows through the filter medium (36),
- determining the resulting differential pressure Δpᵣ from the difference between the differential pressures Δp₂ and Δp₁, and
- determining a degree of application of inert material (50) to the filter medium (36) from the resulting differential pressure Δpᵣ.

2. Method according to claim 1, **characterized in that** the resulting differential pressure Δpᵣ is compared with a stored lower threshold value S_{U} and/or with a stored upper threshold value Sₒ.

3. Method according to claim 2, **characterized in that** a signal is generated and/or output
- if the resulting differential pressure Δpᵣ is above the lower threshold value S_{U} and/or below the upper threshold value Sₒ, and/or
- if the resulting differential pressure Δpᵣ is below the lower threshold value S_{U}, and/or
- if the resulting differential pressure Δpᵣ is above the upper threshold value Sₒ.

4. Method according to any of claims 1, 2 or 3, **characterized in that** a differential operating pressure Δp_{b} is determined during the manufacture of a three-dimensional object, and **in that** a degree of clogging Z_{F} of the filter medium is determined from the differential operating pressure Δp_{b}.

5. Method according to claim 4, **characterized in that** a signal is generated and/or output when a predetermined degree of clogging Zₘₐₓ is exceeded.

6. Method according to claim 5, **characterized in that** the filter medium is cleaned off when a predetermined degree of clogging Zₘₐₓ is exceeded.

7. Method according to any of the preceding claims, **characterized in that** the inert material (50) is formed from a drying agent or additionally comprises a drying agent, in particular silica gel, zeolites, calcium chloride, calcium oxide and/or aluminum oxide.

8. Method according to any of the preceding claims, **characterized in that** drying agent (50') is applied to the filter medium (36) in a step which is independent of applying the inert material (50) to the filter medium (36) .

9. Method according to claim 8, **characterized by** the following steps:
- determining the differential gas pressure Δp₁ between the gas pressure (pᵥ₁) before the filter medium and the gas pressure (pₙ₁) after the filter medium before drying agent (50') is applied to the filter medium when the gas flow (37) flows through the filter medium (36),
- determining, at least once, the differential gas pressure Δp₂ between the gas pressure (pᵥ₂) before the filter medium and the gas pressure (pₙ₂) after the filter medium after drying agent (50') is applied to the filter medium (36) when the gas flow (37) flows through the filter medium (36),
- determining the resulting differential pressure Δpᵣ from the difference between the differential pressures Δp₂ and Δp₁, and
- determining a degree of application of drying agent (50') to the filter medium (36) and/or the degree of application of drying agent (50') and a absorbed by the drying agent from the resulting differential pressure Δpᵣ.

10. Device (10) for additively manufacturing a three-dimensional object from powder material, having an object formation chamber (12),
having a working surface (16) in the object formation chamber (12), the working surface (16) comprising a construction platform (18) for producing the three-dimensional object thereon, having a gas flow system (22) for providing a gas flow (37) over the construction platform (18), having a filter unit (26) having a filter medium (36) for filtering the gas flow (37), and
having a monitoring device (46) for monitoring the gas pressures (pᵥ, pₙ) before and after the filter medium (36), **characterized in that** a
metering device (48) is provided for metering and applying an inert material (50) to the filter medium (36), the monitoring device (46) and the metering device (48) being set up to carry out a method according to any of claims 1 to 9.

11. Device according to claim 10, **characterized in that** the metering device (48) is additionally set up for metering and applying a drying agent (50) to the filter medium (36) or a second metering device (48') is provided for metering and applying a drying agent (50) to the filter medium (36), the monitoring device (46) and the second metering device (48') being set up to carry out a method according to either claim 8 or claim 9.

## Revendications

1. Procédé pour faire fonctionner un dispositif (10) pour la fabrication additive d'un objet tridimensionnel, dans lequel un écoulement de gaz (37) est guidé au-dessus d'une plateforme de construction sur laquelle l'objet tridimensionnel est construit, et dans lequel l'écoulement de gaz (37) est acheminé à travers un milieu filtrant (36), **caractérisé par** les étapes suivantes :
- la détermination de la pression gazeuse différentielle Δp₁ entre la pression gazeuse (pᵥ₁) devant et la pression gazeuse (pₙ₁) derrière le milieu filtrant avant une application de matériau inerte (50) sur le milieu filtrant (36) lorsque l'écoulement de gaz (37) traverse le milieu filtrant (36), dans lequel un matériau granulaire ou pulvérulent, qui comprend du calcaire, du sable, du verre et/ou de la céramique et/ou est formé de ceux-ci, est utilisé comme matériau inerte (50),
- l'application de matériau inerte (50) sur le milieu filtrant (36),
- la détermination de la pression gazeuse différentielle Δp₂ entre la pression gazeuse (pᵥ₂) devant et la pression gazeuse (pₙ₂) derrière le milieu filtrant avant l'application du matériau inerte sur le milieu filtrant (36) lorsque l'écoulement de gaz (37) traverse le milieu filtrant (36),
- la détermination de la pression différentielle résultante Δpᵣ à partir de la différence des pressions différentielles Δp₂ et Δp₁, et
- la détermination d'un degré d'application de matériau inerte (50) sur le milieu filtrant (36) à partir de la pression différentielle résultante Δpᵣ.

2. Procédé selon la revendication 1, **caractérisé en ce que** la pression différentielle résultante Δpᵣ est comparée à une valeur seuil inférieure S_{U} mise en mémoire et/ou à une valeur seuil supérieure Sₒ mise en mémoire.

3. Procédé selon la revendication 2, **caractérisé en ce qu'**un signal est produit et/ou émis,
- lorsque la pression différentielle résultante Δpᵣ se situe au-dessus de la valeur seuil inférieure S_{U} et/ou au-dessous de la valeur seuil supérieure Sₒ, et/ou
- lorsque la pression différentielle résultante Δpᵣ se situe au-dessous de la valeur seuil inférieure S_{U}, et/ou
- lorsque la pression différentielle résultante Δpᵣ se situe au-dessus de la valeur seuil supérieure Sₒ.

4. Procédé selon la revendication 1, 2 ou 3, **caractérisé en ce que** pendant la fabrication d'un objet tridimensionnel une pression différentielle de fonctionnement Δp_{b} est déterminée, et qu'un degré d'ajout Z_{F} du milieu filtrant est déterminé à partir de la pression différentielle de fonctionnement Δp_{b}.

5. Procédé selon la revendication 4, **caractérisé en ce que** lors du dépassement d'un degré d'ajout Zₘₐₓ prédéfini un signal est produit et/ou émis.

6. Procédé selon la revendication 5, **caractérisé en ce que** lors du dépassement d'un degré d'ajout Zₘₐₓ prédéfini le milieu filtrant est nettoyé.

7. Procédé selon l'une quelconque des revendications précédentes, **caractérisé en ce que** le matériau inerte (50) est formé d'un déshydratant ou comprend en plus un déshydratant, en particulier du gel de silice, des zéolithes, du chlorure de calcium, de l'oxyde de calcium et/ou de l'oxyde d'aluminium.

8. Procédé selon l'une quelconque des revendications précédentes, **caractérisé en ce que** dans une étape dépendant de l'application du matériau inerte (50) sur le milieu filtrant (36) un déshydratant (50') est appliqué sur le milieu filtrant (36) .

9. Procédé selon la revendication 8, **caractérisé par** les étapes suivantes :
- la détermination de la pression gazeuse différentielle Δp₁ entre la pression gazeuse (pᵥ₁) devant et la pression gazeuse (pₙ₁) derrière le milieu filtrant avant une application de déshydratant (50') sur le milieu filtrant lorsque l'écoulement de gaz (37) traverse le milieu filtrant (36),
- au moins la détermination unique de la pression gazeuse différentielle Δp₂ entre la pression gazeuse (pᵥ₂) devant et la pression gazeuse (pₙ₂) derrière le milieu filtrant après l'application du déshydratant (50') sur le milieu filtrant (36) lorsque l'écoulement de gaz (37) traverse le milieu filtrant (36),
- la détermination de la pression différentielle résultante Δpᵣ à partir de la différence des pressions différentielles Δp₂ et Δp₁, et
- la détermination d'un degré d'application de déshydratant (50') sur le milieu filtrant (36) et/ou du degré d'application de déshydratant (50') et d'un reçu par le déshydratant à partir de la pression différentielle résultante Δpᵣ.

10. Dispositif (10) pour la fabrication additive d'un objet tridimensionnel à partir de matériau pulvérulent,
avec une chambre de formation d'objet (12),
avec une surface de travail (16) dans la chambre de formation d'objet (12), dans lequel la surface de travail (16) présente une plateforme de construction (18) pour la fabrication de l'objet tridimensionnel sur celle-ci,
avec un système d'écoulement de gaz (22) pour la fourniture d'un écoulement de gaz (37) au-dessus de la plateforme de construction (18),
avec une unité de filtration (26) avec un milieu filtrant (36) pour la filtration de l'écoulement de gaz (37), et
avec un dispositif de surveillance (46) pour la surveillance des pressions de gaz (pᵥ, pₙ) devant et derrière le milieu filtrant (36), **caractérisé en ce qu'**un dispositif de dosage (48) pour le dosage et l'application d'un matériau inerte (50) sur le milieu filtrant (36) est prévu, dans lequel le dispositif de surveillance (46) et le dispositif de dosage (48) sont conçus pour la mise en œuvre d'un procédé selon l'une quelconque des revendications 1 à 9.

11. Dispositif selon la revendication 10, **caractérisé en ce que** le dispositif de dosage (48) est conçu en plus pour le dosage et l'application d'un déshydratant (50) sur le milieu filtrant (36) ou un deuxième dispositif de dosage (48') est prévu pour le dosage et l'application d'un déshydratant (50) sur le milieu filtrant (36), dans lequel le dispositif de surveillance (46) et le deuxième dispositif de dosage (48') sont conçus pour la mise en œuvre d'un procédé selon la revendication 8 ou 9.
